# EUROPEAN PATENT APPLICATION

(11) **EP 1 670 255 A1**
(43) Date of publication of application: **14.06.2006**
(21) Application number: 04106397.5
(22) Date of filing: 08.12.2004
(51) Int. Cl.: H04N 7/26, H04N 5/262

(54) **Electronic image processing method and device with linked random generators**

(71) Applicant: Koninklijke Philips Electronics N.V., 5621 BA Eindhoven (NL)
(72) Inventor: The designation of the inventor has not yet been filed
(74) Representative: Verdonk, Peter Lambert F. M.

(57) **Abstract**

A method for deterministic film grain addition, e.g. to video signals compressed in a way that the grain is lacking.

The method of electonic image processing comprises:
- determining a first random value (R1) corresponding to a first horizontal pixel position (h1) in a vertically positioned first horizontal line (L1) of an inputted picture (PIC); and
- deriving a resultant value (R) for a second horizontal pixel position (h2) in a vertically positioned second horizontal line (L2), the resultant value depending on the first random value and a second random value (R2) corresponding to the second horizontal pixel position in the second horizontal line, random values for horizontally neighboring pixel positions being determined by successive outputs of a single random generator initialized with a seed,
   wherein the first random value is determined with a first random generator (n1) initialized with a first seed (S1) for a firstmost horizontal pixel position in the first horizontal line (f1), and the second random value is determined with a second random generator (n2) running in parallel with the first random generator, and initialized with a second seed (S2) for a firstmost horizontal pixel position in the second horizontal line (f2), which second seed (S2) is substantially equal to a random value obtained by applying the first random generator (n1) for the firstmost horizontal pixel position in the second horizontal line (f2) after having consecutively been applied to all horizontal positions on a left-right-top-bottom zig-zag scan path (ZZ) being initialized with the first seed (S1) and starting from the firstmost horizontal pixel position in the first horizontal line (f1).

The advantage is lower memory requirements for deterministic film grain addition.

## Description

The invention relates to a method of electronic image processing using randomly generated values, in particular a synthetic grain generation method.

The invention also relates to an apparatus for electronic image processing using randomly generated values, and an electronic image processing device for synthetic grain addition, a picture decompression device, a television signal receiving apparatus and a television signal capturing system comprising such an electronic image processing device.

The invention also relates to a computer program product comprising code describing the method enabling a processor to perform its functionality.

There are a number of image processing methods which need random values for their functioning. In particular synthetic grain generation is such an image processing method. Synthetic grain may e.g. be added to a picture captured by a CCD camera to make it look like a picture captured on celluloid film.

Also, in modem picture and video compression (e.g. the advanced video coding standard AVC), the efficiency of compression of film material is reduced by the presence of grain. Since film grain is not (temporarily) correlated, it requires many bits to accurately compress it. Therefore, it has been proposed remove the grain prior to encoding and to synthesize artificial grain at the decoder side. This has been standardized in the fidelity range extension of H.264 as Film Grain Management (FGM).

In particular, they propose a frequency filtering model, which outperforms an autoregressive model for larger grains.

In particular it is desirable that the grain is generated in a deterministic way. This means that although it looks random, this grain is a random pattern which is generated by at least one seed which looks the same on each receiving/rendering device. This is what the content providers like the Hollywood film studios desire: they can observe at their production site whether the grain looks acceptable according to their criteria (e.g. not too coarse, not interfering with particular fine-textured image content, such as people in the background or text, etc.), and can then force everybody to use their approved seeds, which gives a guaranteed rendering quality.

E.g. non-prepublished application EP 04101141.2 describes such a grain synthesis system, embodiment details of which (such as possible random generators which can be used) will be referred to and not repeated in this application, as it should be clear to the skilled person which combinations can be made.

It is a disadvantage that a direct hardware implementation of FGM with the frequency filtering model is quite complex. This means that a hardware realization needs a large area on a chip, resulting in high costs. To avoid the usage of the Discrete Cosine Transform (DCT), one can use an implementation in which pre-generated blocks of grain are used. However, storage of these blocks in e.g. 40 kByte SRAM also requires a large surface on chip (~1 mm2 = ~ 1/5 of a complete H.264 decoder).

It is an object of the invention to provide a method of electronic image processing using randomly generated values which needs relatively little memory resources.

This object is realized in that the method comprises:
- determining a first random value (R1) corresponding to a first horizontal pixel position (h1) in a vertically positioned first horizontal line (L1) of an inputted picture (PIC); and
- deriving a resultant value (R) for a second horizontal pixel position (h2) in a vertically positioned second horizontal line (L2), the resultant value depending on the first random value and a second random value (R2) corresponding to the second horizontal pixel position in the second horizontal line, random values for horizontally neighboring pixel positions being determined by successive outputs of a single random generator initialized with a seed,
wherein the first random value is determined with a first random generator (n1) initialized with a first seed (S1) for a firstmost horizontal pixel position in the first horizontal line (f1), and the second random value is determined with a second random generator (n2) running in parallel with the first random generator, and initialized with a second seed (S2) for a firstmost horizontal pixel position in the second horizontal line (f2).

A straightforward way to implement a deterministic grain synthesis is to send a single seed for the first image line LF and then to generate all the random values for consecutive pixels in a left-to-right, top-to-bottom zigzag scan.

However the grain at horizontal position h2 in line L2 may e.g. depend on two vertically above generated random values for the same horizontal position h2. This means that at a certain moment in time, when the final grain value for (h2,L2) is being determined, those previously required random values are required, i.e. one needs to store in line memories two additional lines of samples. To have the right correlation length of the grain, one needs e.g. 8 vertical neighbors or more.

It is not possible to just use a number of random generators in parallel (with arbitrary seeds), since than the grain is not deterministic/content provider-accepted, but random (for each different receiver/rendering apparatus).

With the invention the random generators can be run in parallel at the time the particular vertically neighboring random values are needed for a pixel at position (h2, L2), this avoiding the line memories. Of course to have a content provider-acceptable grain look, the seeds cannot be just anything, but need to be verified.

E.g. if the picture has height H, H seeds can be sent with the picture signal.

An embodiment of the method comprises:
- determining a first random value (R1) corresponding to a first horizontal pixel position (h1) in a vertically positioned first horizontal line (L1) of an inputted picture (PIC); and
- deriving a resultant value (R) for a second horizontal pixel position (h2) in a vertically positioned second horizontal line (L2), the resultant value depending on the first random value and a second random value (R2) corresponding to the second horizontal pixel position in the second horizontal line, random values for horizontally neighboring pixel positions being determined by successive outputs of a single random generator initialized with a seed,
wherein the first random value is determined with a first random generator (n1) initialized with a first seed (S1) for a firstmost horizontal pixel position in the first horizontal line (f1), and the second random value is determined with a second random generator (n2) running in parallel with the first random generator, and initialized with a second seed (S2) for a firstmost horizontal pixel position in the second horizontal line (f2), which second seed (S2) is substantially equal to a random value obtained by applying the first random generator (n1) for the firstmost horizontal pixel position in the second horizontal line (f2) after having consecutively been applied to all horizontal positions on a left-right-top-bottom zig-zag scan path (ZZ) being initialized with the first seed (S1) and starting from the firstmost horizontal pixel position in the first horizontal line (f1).

It is preferable if the content provider need not bother by such implementation issues as whether the receiver will use the single master seed approach with a zig-zag scanning and the required line memories, or whether the receiver will work according to the present invention: he will e.g. just send his single master seed SM, irrespective of what grain rendering method is used.

According to the present invention, the required N seeds can be evaluated at the receiving side prior to applying the N random generators in parallel. Because the single seed random generation goes through each line consecutively, the random value at the beginning of a line (firstmost point), being used for generating the next random values (i.e. which can be interpreted as a seed for that line) can hence be simply obtained by running the random generator so many times from its firstmost/starting point (the first pixel on the first line LF) until the present line firstmost point is reached. This can be done quickly to determine all H seeds for all lines, and then the actual image processing can begin.

The random generators than run substantially in parallel, e.g. if one needs to calculate the resultant value (R) for position h2, and the grain is determined based on two previous and the current line (and for simplicity of argument no horizontal neighbors) then the preferred construction has three random generators outputting a value for this h2 position, namely the first for (h2,L0), the second for (h2,L1) and the third for (h2, L2). A simple FIR filter may then be employed for weighted adding of these three random values.

A typical image processing method is synthetic grain generation, and the grain may depend on the underlying pixel values of an inputted picture at the positions for which a random value is being generated, e.g. a DC term in a block-transform compressed picture.

An input picture may be uncompressed (e.g. just a zigzag scanned set of pixel values between 0 and 255) or obtainable after decompressing a compressed representation (e.g. MPEG-2, AVC, JPEG, ...). The method may then be performed in a picture compression device, which is e.g. a part of a dedicated IC, or a software module running on a processor.

A FIR filter-only generation requires almost no memory, but many calculations because a long FIR filter may be required.

Alternatively a combination realization may be made wherein a part of the filter is realized as a FIR (generating a local/high frequency correlation of the grain) and a part is realized as an IIR (realizing the long-distance/low frequency correlation due to its integration properties). In such a combination no more than two line memories need to be used, which is still considerably less than e.g. 8.

The image processing device and the picture processing device is advantageously incorporated in a television signal receiving apparatus, which is arranged to receive a television signal from a network (e.g. wireless terrestrial television, or a telephone network), and process it, in particular add grain. The television signal receiving apparatus may e.g. comprise a display to also display the signal, or may be a separate unit such a settopbox. It may be a portable apparatus such as a wireless phone. It may also comprise storage functionality, e.g. a personal video recorder, which adds the grain to a received television signal before storing it in a memory.

The television signal receiving apparatus may also be e.g. a disk reader, in which case the television signal is received from its storage on a disk, which only contains the non-grainy, smooth picture and a seed.

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concept, and in which dashes are used to indicate that a component is optional, non-dashed components not necessarily being essential.

In the drawings:
Fig. 1 schematically shows a picture for explaining the method;
Fig. 2 schematically shows a prior art FIR grain synthesis device;
Fig. 3 schematically shows an embodiment of a FIR grain synthesis device according to the invention;
Fig. 4 schematically shows an embodiment of a grain synthesis device with an IIR filter part according to the invention;
Fig. 5 schematically shows a picture decompression apparatus comprising an electronic image processing device according to the invention; and
Fig. 6 schematically shows a television signal capturing system according to the invention.

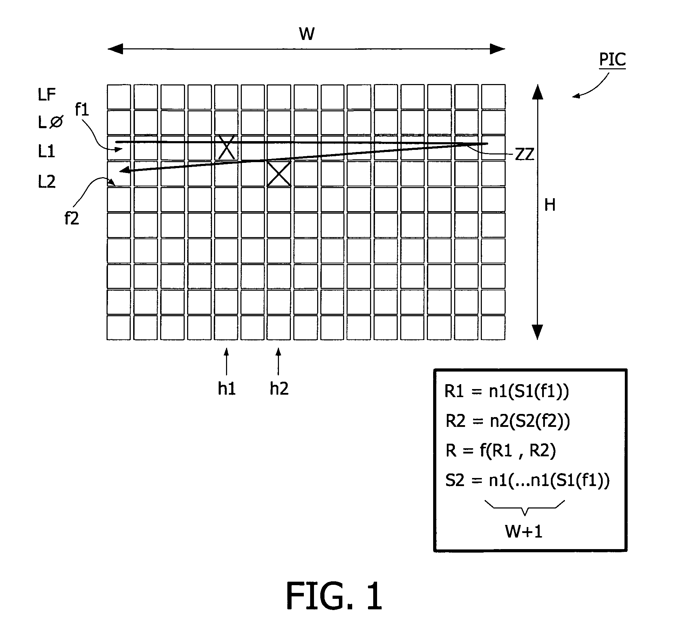

Fig. 1 shows the geometrical setup of the random resultant value R generation as a function of the geometrical pixel positions of an inputted picture PIC.

The random values may be needed for any image operation, e.g. a recoloring for implementing an artistic effect depending on the underlying picture content and the random value, a genetic algorithm based image operation, etc. In the remainder we limit the description of the system to the particular application of grain synthesis, as the skilled person can easily incorporate the basic random value generation part into other image processing functions.

A resultant value is needed for a pixel position (h2, L2) (second cross). If the random process is not local to a pixel, the generated random values for neighboring pixels are required, typically for horizontal as well as vertical neighbors.

An alternative to the frequency space method is to generate the grain in the time domain using Finite Impulse Response (FIR) filters and/or recursive (IIR) filters. Grain that has been generated in this way has approximately the same statistical properties as the grain generated with the DCT. In this way both the large memory and the DCT are not needed.

To get visually similar results, a FIR filter of quite high order q is needed (~8-16).

Application of this filter in the vertical direction with the prior art single seed method requires line memories equal to the order of the filter, i.e. e.g. for lines L1, L0, .... For High Definition material, this requires
= 8(order)*1920(horizontal res)*2(bytes per pixel) = 32 kByte.

The input of the FIR/IIR filter is white noise (with a particular amplitude, e.g. Fv(1), Fv(2), ... generated on the basis of pixel values of underlying and possibly neighboring pixels or blocks) that is generated using a pseudo-random generator. If this white noise is generated sequentially using a single random generator, the result has to be stored in line memories. In the method of the present invention instead q (the FIR filter order) random generators are used in parallel to generate the input for the as they are needed by the filter. By initializing all random generators by the right seed, the output of this filter can be made identical to the random numbers generated by a single pseudo-random generator.

An example of a random generator known from literature is based on m registers with an exor feedback from the Isb side to the msb. The length m determines the length of repetition of the random value and should therefore be large. The last n Isb bits form the n bits random value. The random generator can be made deterministic by resetting the register at a certain moment, e.g. beginning of the sequence, to a so-called seed number.

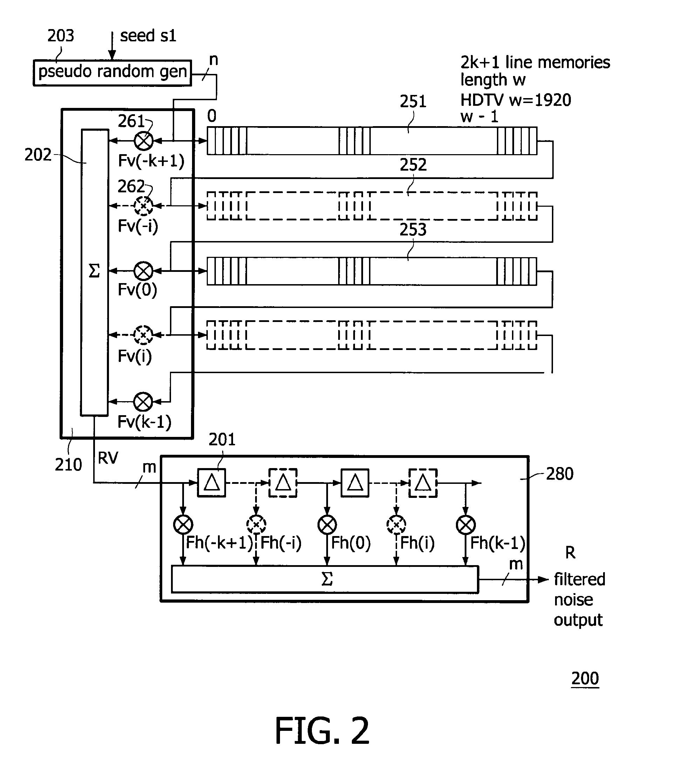

Fig. 2 shows a prior art filter 200 to filter the pseudo random noise, coming from e.g. the exor pseudo random noise generator 203, in both vertical and horizontal direction by means of a (horizontally/vertically) separable filter. The number of FIR filter order q is here 2k+1. In order to filter in the vertical direction 2k line memories are required of n bits. The vertical filtered results are the m bits results of the summation by adder 202 of the 2k+1 FIR multipliers (261, 262, ...) in vertical FIR filter 210. This intermediate result RV is then fed to the horizontal filter stage 280, which is formed by 2*k registers (i.e. the blocks like 201 are delays) and the FIR multipliers and a summation. The costs are dominated by the cost of the 2*k line memories (251, 252, 253, ...).

As said before, these memory costs can be avoid by using the method/device of the present invention.

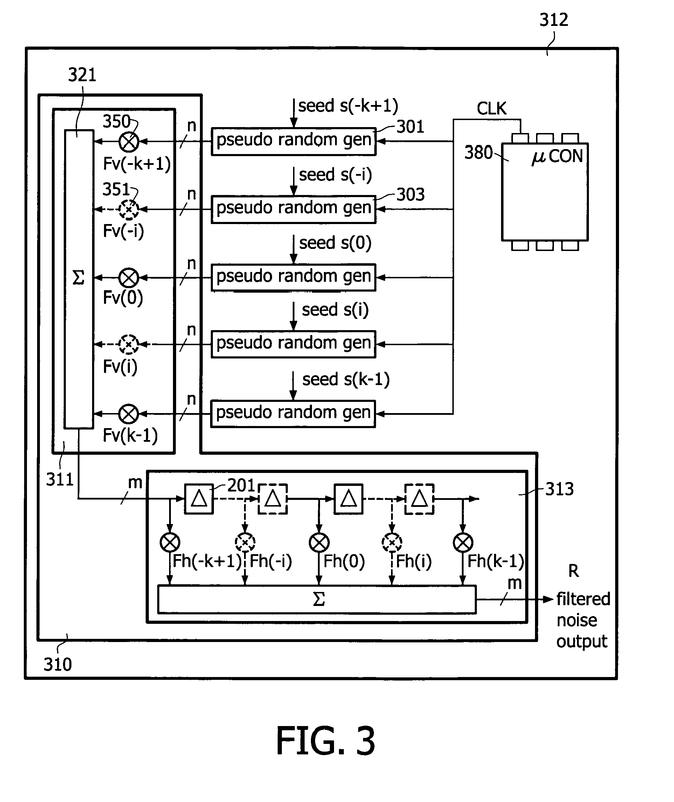

In Fig. 3, the signals as produced by the line memories of fig 2 are now produced by separate pseudo random generators 301, 303 etc.. In order to produce the exact same values as in fig 2, during a pre-calculation, 2k+1 seeds are calculated in such a way that the successive seeds have a 'shift' of the length w of the line memories. This means e.g. that seed s(1) has the value of the output of a random generator initialized with seed(0) 1920 sample moments later.

The vertical part of the decomposable FIR filtering is realized with vertical FIR filter 311. Vertically adjacent determined random values are multiplied with coefficients Fv(-k+1) etc., which coefficients e.g. follow a Gaussian or exponential decreasing pattern. The so weighted random values are added in an adder. This procedure is done consecutively for horizontally neighboring pixels. A so obtained value for a horizontal position h-1 is delayed by delay 201 and the vertical FIR filtered random value for horizontal position h is then determined, etc.

Finally, this neighboring vertical resulting values are weighed and added in a horizontal FIR filter 313, yielding the final resultant value (R).

The parallel execution of the random generators 301, 303, ... is under the control of a control means 380 (e.g. a processor running a software encoded control algorithm or a similar purely hardware realized means, etc.). The skilled person can find different prior art ways to construct such a control, e.g. with a means which outputs a clock signal CLK which triggers the random generation.

A slight disadvantage in FGM using the FIR filtering technique to generate low frequency noise is that relative large values for k are needed (e.g. >=8).

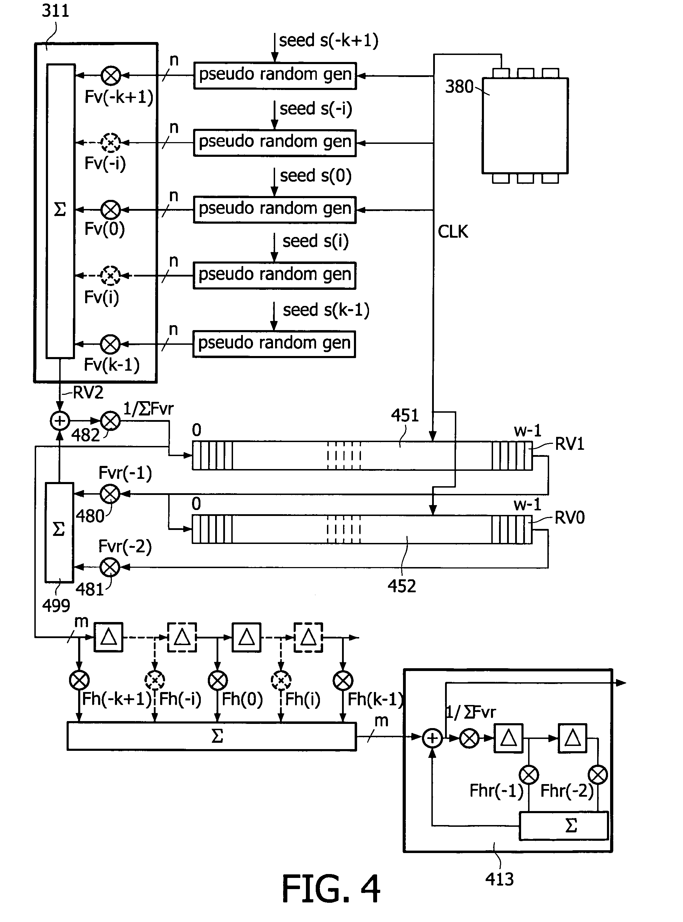

Fig. 4 gives an alternative embodiment of the claimed invention which makes use of a combination of FIR (fmite impulse response) & IIR (infinite impulse response) filter technique.

Although two line memories (an order 2 vertical IIR) is preferred, 1 line memory would be enough (one can also use higher order line memories, but this increases again the required memory, hence the trade-off should be a small order for the IIR part, so that the quality of the grain is enough).

Here k of the FIR part can be significantly smaller (=<4), while only a few line memories are needed.

The vertical FIR filter part is similar as in the embodiment of Fig. 3, but fewer filter taps may be used.

The filter works as follows. At a certain horizontal position h2, a resultant vertically FIR filtered value RV2 is obtained. This value RV2 is added by adder 499 to previously determined values RV1 and RV0. The values are properly weighed (by multipliers 480, 481) by filter coefficients Fvr(-1), Fvr(-2) and (by multiplier 482) 1/*ΣFvr* , so that the result doesn't overflow outside the [0,255] interval, and although there is correlation, there is only a limited memory, so that the noise generated adapts to new circumstances, such as e.g. different underlying grey values (obviously the method can be expanded to color pictures).

This addition (now having a contribution of at least three vertical positions) is saved in an upper line memory 451. All memories shift synchronously with the vertical FIR filter 311 to the next horizontal picture position. In this way after W positions have been processed, the horizontal position h2 is up for processing again, i.e. in the long run this device implements a vertical IIR filter (having decreasing contributions of pixels in the vertical past).

Similarly unit 413 realizes a horizontal IIR filter, which is of course optional, as one can also use a pure FIR filter horizontally.

In this embodiment the clock signal CLK of the control means 380 also controls the shifting of the samples in the line memories (and the writing into it of a newly determined vertically filtered random value) in synchrony with the random generation.

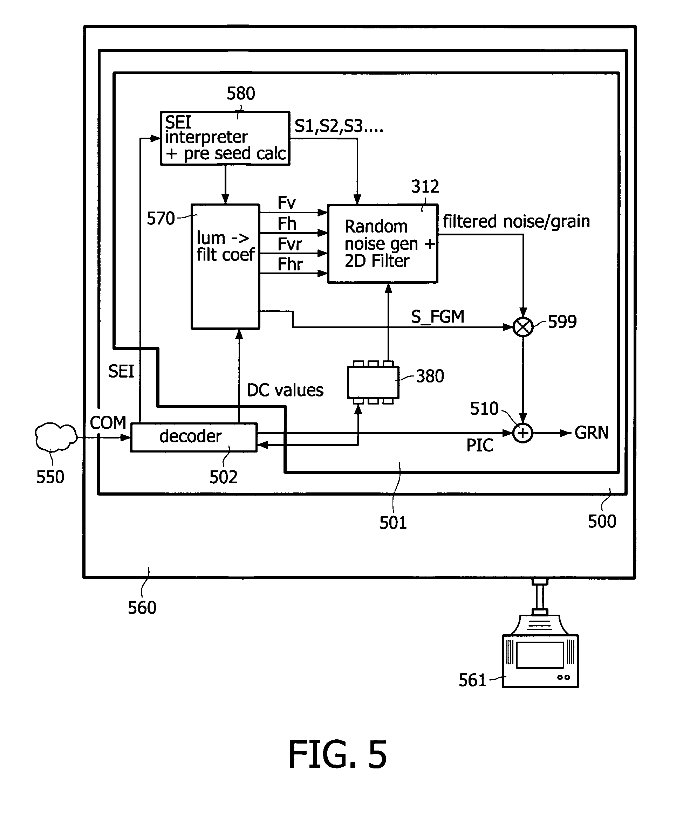

Fig 5 shows an example of a picture decompression device 500, which may be comprised in a television signal receiving apparatus 560 in the exemplary embodiment e.g. a settopbox connected to a display 561 (wired or wirelessly).

A picture decompression unit 502 is arranged to decompress a compressed picture inputted from a network 550 into an uncompressed image signal PIC. The picture decompression unit 502 may be further arranged to provide the DC values of the compressed picture to e.g. a memory unit 570, which may e.g. comprise a look-up table evaluation unit for converting these DC values to appropriate weighing factors Fv, Fh, Fvr, ....

The seed and grain generation parameters (i.e. the constants of the filtering, which determine the grain look) is typically encoded in a so-called Supplemental enhancement information (SEI) message.

This SEI information is passed by the picture decompression unit 502 to a seed dispenser 580, which may e.g. be embodied as a seed calculator which is arranged pre-calculate the initial seed values based on e.g. a single master seed SM for the firstmost pixel of the first line LF, and pass them to the electronic image processing device 312 when required by the random generators.

The SEI interpreter also sends the grain look determining parameters to the memory unit 570 to determine the correct lookup table filter parameters.

The lookup table contains the relation of the luma intensity and grain parameters to the filter coefficients Fv, Fh, Fvr & Fhr and noise strength value S_FGM.

Via a multiplier 599 the noise strength value S_FGM controls the amplitude of the filtered noise output which is added by adder 510 to the video content of the PIC.

Instead of generating a grain value for each pixel position, a coarser scale grain picture may be generated (which can be done in either or both of the horizontal and vertical directions) and subsequently interpolated, preferably by a zero order hold (i.e. copying of the previous value). Such a zero order hold is a good approximation for slowly varying functions (i.e. low frequency grain).

This has as the advantage that with only an 8 taps filter an effective correlation length of 16 taps can be made.

I.e., e.g. for each second or third pixel a value is calculated, and it is then copied to e.g. its horizontal neighbor(s).

For the vertical direction the following options are possible:
- either an extra line memory is used for containing the picture grey values for at least a fraction of the width of the picture, and the resulting grain value is added to the grey values e.g. 4 times in a 2x2 block (i.e. both to the current pixel and the one stored in the extra grain value)
- the same is possible in memory access which is not typical zigzag line based, e.g. block or random access
- a currently preferred option (because at present only little memory is available in e.g. decompressors or other image processing ICs, i.e. one wants to process the pixel and get it into processor external memory as quickly as possible) is that the same (zero order holded) grain value is calculated twice (and added only to the local pixels in processor memory). This can be done by resetting the seed for the second of a pair of lines.

Note that this subsampled grain synthesis is not the same as performing a [10 1 0 1 ...] filtering for each consecutive pixel, as this would lead to uncorrelated neighboring pixels.

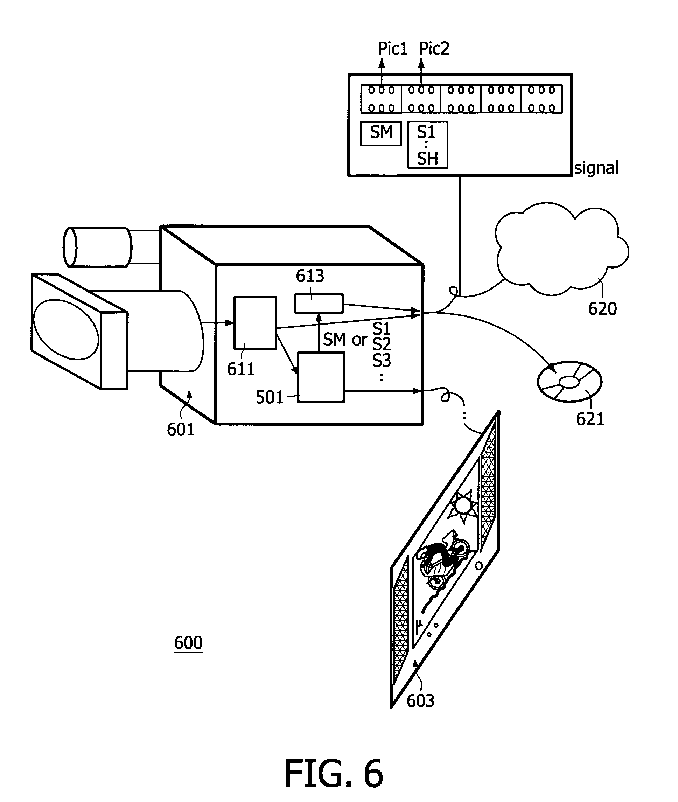

Fig. 6 shows a television signal capturing system 600. The components of the present invention are in the exemplary embodiment incorporated in a camera 601, but could of course reside elsewhere in the system 600. A picture is captured and processed (e.g. white point calibration) by a picture derivation unit 611. It is assumed in this simplistic example that no compression occurs yet, although the skilled person should be able to incorporate this in the system. Grain is added corresponding to a preference (a master seed SM for the firstmost position of the first line LF) with an electronic image processing device for synthetic grain addition (501) according to the present invention. The camera operation, director of photography, artistic post-producer etc. can look at the result on a display 603, which may form part of the camera, or be connected somewhere else in the system 600, and possibly display the grain added result at a time instant later than the camera capturing. If the responsible person agrees with the result, a video signal may be constructed on the basis of the captured picture(s) and the master seed(s) SM (there may be different seeds for e.g. different shots). This signal may be sent to a network 620 or stored in a memory 621, such as e.g. a blu-ray disk.

The algorithmic components disclosed in this text may in practice be (entirely or in part) realized as hardware (e.g. parts of an application specific IC) or as software running on a special digital signal processor, or a generic processor, etc.

Under computer program product should be understood any physical realization of a collection of commands enabling a processor -generic or special purpose-, after a series of loading steps (which may include intermediate conversion steps, like translation to an intermediate language, and a final processor language) to get the commands into the processor, to execute any of the characteristic functions of an invention. In particular, the computer program product may be realized as data on a carrier such as e.g. a disk or tape, data present in a memory, data traveling over a network connection -wired or wireless- , or program code on paper. Apart from program code, characteristic data required for the program may also be embodied as a computer program product.

Some of the steps required for the working of the method may be already present in the functionality of the processor instead of described in the computer program product, such as data input and output steps.

It should be noted that the above-mentioned embodiments illustrate rather than limit the invention. Apart from combinations of elements of the invention as combined in the claims, other combinations of the elements are possible. Any combination of elements can be realized in a single dedicated element.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

## Claims

1. Method of electronic image processing comprising:
- determining a first random value (R1) corresponding to a first horizontal pixel position (h1) in a vertically positioned first horizontal line (L1) of an inputted picture (PIC); and
- deriving a resultant value (R) for a second horizontal pixel position (h2) in a vertically positioned second horizontal line (L2), the resultant value depending on the first random value and a second random value (R2) corresponding to the second horizontal pixel position in the second horizontal line, random values for horizontally neighboring pixel positions being determined by successive outputs of a single random generator initialized with a seed,
wherein the first random value is determined with a first random generator (n1) initialized with a first seed (S1) for a firstmost horizontal pixel position in the first horizontal line (f1), and the second random value is determined with a second random generator (n2) running in parallel with the first random generator, and initialized with a second seed (S2) for a firstmost horizontal pixel position in the second horizontal line (f2).

2. Method of electronic image processing as claimed in claim 1, in which the second random generator (n2) is initialized with the second seed (S2) being substantially equal to a random value obtained by applying the first random generator (n1) for the firstmost horizontal pixel position in the second horizontal line (f2) after having consecutively been applied to all horizontal positions on a left-right-top-bottom zig-zag scan path (ZZ) and being initialized with the first seed (S1) and starting from the firstmost horizontal pixel position in the first horizontal line (f1).

3. Method of electronic image processing as claimed in claim 1 or 2, wherein the deriving a resultant value (R) is part of generating a random synthetic grain value for the second horizontal pixel position in the second horizontal line, and which generating a random synthetic grain value further comprises adding the synthetic grain value to a pixel value of an inputted image in the second horizontal pixel position in the second horizontal line, to yield a grainy output picture (GRN).

4. Method of electronic image processing as claimed in claim 3, in which the synthetic grain value is dependent on a value of the inputted image in the first horizontal pixel position in the first horizontal line and the second horizontal pixel position in the second horizontal line.

5. Method of electronic image processing as claimed in claim 3 or 4, in which the synthetic grain value is generated on a reduced resolution compared to a resolution of the inputted image, and second synthetic grain values are generated on the resolution of the inputted image by interpolation prior to the adding the synthetic grain value to a pixel value of the inputted image.

6. An electronic image processing device (312) comprising:
a) A first random generator (301) arranged to determine a first random value (R1) corresponding to a first horizontal pixel position (h1) in a vertically positioned first horizontal line (L1) of an inputted picture (PIC);
b) A second random generator (303) arranged to determine a second random value (R2) corresponding to a second horizontal pixel position (h2) in a vertically positioned second horizontal line (L2); the first random generator (301) and second random generator (303) being arranged to determine random values for horizontally neighboring pixel positions by successive outputs of the respective single random generator and the electronic image processing device (312) being arranged to initialize the first random generator (301) with a first seed (S1) for a firstmost horizontal pixel position in the first horizontal line (f1) and to initialize the second random generator (303) with a second seed (S2) for a firstmost horizontal pixel position in the second horizontal line (f2).
c) A derivation means (310) arranged to derive a resultant value (R) for the second horizontal pixel position (h2) in the vertically positioned second horizontal line (L2), the resultant value depending on the first random value and the second random value; and
d) control means (380) arrangeable to control the first and second random generator to determine the first and second random value substantially in parallel.

7. An electronic image processing device (312) as claimed in claim 6, comprising a seed calculator (580) arrangeable to determine the second seed (S2) substantially equal to a random value obtained by applying the first random generator for the firstmost horizontal pixel position in the second horizontal line (f2) after having consecutively been applied to all horizontal positions on a left-right-top-bottom zig-zag scan path (ZZ) and being initialized with the first seed (S1) and starting from the firstmost horizontal pixel position in the first horizontal line (f1).

8. An electronic image processing device for synthetic grain addition (501) comprising an electronic image processing device (312) as claimed in claim 6 or 7 usable for generating a synthetic grain, and further comprising an adder (510) arranged to add the synthetic grain value to a pixel value of the inputted picture (PIC) in the second horizontal pixel position in the second horizontal line, and arranged to yield a grainy output picture (GRN).

9. A picture decompression device (500) comprising a picture decompression unit (502) arranged to decompress an image compressed according to a picture compression standard (COM) into an uncompressed picture representation (PIC), the picture decompression unit (502) being coupled to an electronic image processing device (312) as claimed in claim 6 or 7 or an electronic image processing device for synthetic grain addition (501) as claimed in claim 8.

10. An electronic image processing device (312) as claimed in claim 6 or 7,
wherein the derivation means (310) comprises a FIR filter (311, 313) for deriving the resultant value (R) as a weighted sum of random values determined corresponding to neighboring pixels.

11. An electronic image processing device (312) as claimed in claim 6 or 7,
wherein the derivation means (310) comprises a IIR filter (411, 413) for deriving the resultant value (R) as a function of random values determined corresponding to neighboring pixels.

12. An electronic image processing device (312) as claimed in claim 6 or 7,
wherein the derivation means (310) comprises a non-linear function evaluation means for deriving the resultant value (R) as a non-linear function of random values determined corresponding to neighboring pixels.

13. A television signal receiving apparatus (560) comprising an electronic image processing device (312) as claimed in claim 6 or 7 or a picture decompression apparatus (500) as claimed in claim 9.

14. A television signal capturing system (600) comprising a camera (601) arranged to capture a picture, and an electronic image processing device for synthetic grain addition (501) as claimed in claim 8 arranged to process the picture.

15. A computer program product comprising a processor readable code to enable a processor to execute the method according to claim 1, the processor readable code comprising:
a) code for determining a first random value (R1) corresponding to a first horizontal pixel position (h1) in a vertically positioned first horizontal line (L1), with a first random generator unit initialized with a first seed (S1) for a firstmost horizontal pixel position in the first horizontal line (f1);
b) code for determining a second random value (R2) corresponding to a second horizontal pixel position (h2) in a vertically positioned second horizontal line (L2), with a second random generator unit initialized with a second seed (S2) for a firstmost horizontal pixel position in the second horizontal line (f2); the first random generator unit and second random generator unit being coded to determine random values for horizontally neighboring pixel positions by successive outputs of the respective single random generator;
c) code for deriving a resultant value (R) for a second horizontal pixel position in a vertically positioned second horizontal line, the resultant value depending on the first random value and a second random value (R2) corresponding to the second horizontal pixel position in the second horizontal line; and
d) control code to determine the second random value in parallel with the first random value.

16. A computer program product comprising a processor readable code to enable a processor to execute the method according to claim 2, the processor readable code comprising:
a) code for determining a first random value (R1) corresponding to a first horizontal pixel position (h1) in a vertically positioned first horizontal line (L1), with first random generator unit initialized with a first seed (S1) for a firstmost horizontal pixel position in the first horizontal line (f1);
b) code for determining a second random value (R2) corresponding to a second horizontal pixel position (h2) in a vertically positioned second horizontal line (L2), with a second random generator unit initialized with a second seed (S2) for a firstmost horizontal pixel position in the second horizontal line (f2); the first random generator unit and second random generator unit being coded to determine random values for horizontally neighboring pixel positions by successive outputs of the respective single random generator;
c) code for deriving a resultant value (R) for a second horizontal pixel position in a vertically positioned second horizontal line, the resultant value depending on the first random value and the second random value;
d) control code to determine the second random value in parallel with the first random value; and
e) seed determining code to determine the second seed (S2) as substantially equal to a random value obtained by applying the first random generator (n1) for the firstmost horizontal pixel position in the second horizontal line (f2) after having consecutively been applied to all horizontal positions on a left-right-top-bottom zig-zag scan path (ZZ) being initialized with the first seed (S1) and starting from the firstmost horizontal pixel position in the first horizontal line (f1).
